(19) **Europäisches Patentamt / European Patent Office / Office européen des brevets**

(11) **EP 2 602 030 B1**

(12) **FASCICULE DE BREVET EUROPEEN**

(45) Date de publication et mention
de la délivrance du brevet:
**04.03.2015 Bulletin 2015/10**

(51) Int Cl.:
***B07C 5/34*** (2006.01)

(21) Numéro de dépôt: **12306508.8**

(22) Date de dépôt: **04.12.2012**

(54) **Procédé et installation d'inspection et/ou de tri combinant analyse de surface et analyse volumique**

Prüf- und/oder Sortierverfahren und -anlage mit kombinierter Oberflächen- und Volumenanalyse

Method and facility for inspecting and/or sorting, combining surface analysis and volume analysis

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2011 FR 1161200**

(43) Date de publication de la demande:
**12.06.2013 Bulletin 2013/24**

(73) Titulaires:
- **Pellenc Selective Technologies (Societe Anonyme)**
  **84120 Pertuis (FR)**
- **Université de Savoie (Établissement Public à Caractère Scientifique, Culturel et Professionnel)**
  **73000 Chambery (FR)**

(72) Inventeurs:
- **Bourely, Antoine**
  **84240 La Tour-d'Aigues (FR)**
- **Mouneyrac, David**
  **19520 Mansac (FR)**
- **Coutaz, Jean-Louis**
  **73160 Saint-Cassin (FR)**
- **Garet, Frédéric**
  **73160 Saint-Cassin (FR)**
- **Blampey, Benjamin**
  **74150 Rumilly (FR)**

(74) Mandataire: **Nuss, Laurent et al**
**Cabinet Nuss**
**10, rue Jacques Kablé**
**67080 Strasbourg Cedex (FR)**

(56) Documents cités:
**FR-A1- 2 895 688**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine de la caractérisation rapide d'objets, d'articles ou analogues en défilement, en particulier de déchets, en vue de leur discrimination et/ou évaluation, et a pour objet un procédé et une installation pour l'inspection et/ou le tri automatique d'objets, articles ou analogues.

Une pluralité de solutions ont déjà été proposées dans le cadre du domaine évoqué précédemment.

Ainsi, de nombreux procédés de mesure en surface ou à faible pénétration ont été développés pour les applications de tri automatique.

A titre d'exemple, FR-A-2 895 688 décrit un procédé et une machine automatique d'inspection et de tri d'objets non métalliques dans laquelle la couche supérieure de chaque objet défilant sur un tapis est soumise temporairement à un rayonnement calorique. Une analyse thermographique de l'objet est ensuite réalisée afin de déterminer le type d'objet. Cette technique est notamment utilisée pour la distinction des papiers, des cartons, etc. Ce procédé de distinction possède des limites en ce qu'il n'est pas possible de faire la distinction entre une cartonnette (carton plat) et certains magazines. En effet, la couverture du magazine, quand elle est épaisse, a le même comportement thermique qu'une cartonnette. Ainsi, lors du tri, le magazine va être considéré comme une cartonnette et ne sera donc pas bien valorisé. Une seconde limitation rencontrée par ce procédé est liée à l'humidité des objets défilant sur le tapis. Un objet humide a un comportement différent d'un objet sec, la différence étant d'autant plus grande que le taux d'humidité est important. L'erreur sur le tri est alors augmentée.

EP-A-124 350, quant à lui, décrit un système d'analyse en surface utilisant la spectroscopie infrarouge. Ce système permet la différenciation d'objets de différentes catégories tels que différents plastiques (PET, PETG, PS, ABS, etc). C'est l'analyse spectroscopique en surface de l'objet qui permet de réaliser cette différenciation.

Par ailleurs, d'autres procédés permettant la mesure de l'épaisseur d'un objet ont été développés. Ces procédés utilisent des technologies en transmission telles que, par exemple, les différentes technologies à rayons X, rayons Gamma ou des technologies à plus faible énergie comme les hyperfréquences.

Dans le domaine des hyperfréquences, de nombreux brevets présentent des systèmes de caractérisation de matériaux ont été proposés.

Certains de ces systèmes utilisant des radiations microondes existent pour la mesure d'humidité, comme par exemple ceux décrits dans US-A-5845529 et US-A-5333493. Ces demandes de brevets américains divulguent des systèmes qui permettent de mesurer le taux d'humidité dans des balles épaisses de produits secs, comme par exemple des balles de tabac, coton, bois, pour le premier document américain précité et le taux d'humidité dans du charbon pour le second document américain précité. Pour cela, le signal microonde est envoyé au travers de l'objet à mesurer. A l'aide d'une mesure d'amplitude et de phase, il est alors possible de déterminer le taux d'humidité de l'objet sous test. Notons que ces mesures ne sont pas destinées à distinguer des balles de différentes compositions, en dehors des différences de taux d'humidité.

Il existe d'autres publications présentant des solutions dans le domaine des hyperfréquences qui permettent la caractérisation de matériaux. A titre d'exemple, on peut citer le document FR-A-2 906 369 qui décrit un dispositif hyperfréquence de contrôle et de détection de défauts dans des matériaux principalement homogènes tels qu'un tapis de laine de verre. Ce dispositif est composé d'un système d'émission qui illumine l'objet à caractériser. En réception, un réseau d'antennes permet de capter le signal émis. En fonction de l'amplitude et de la phase du signal, il est possible de déterminer les défauts.

Enfin, des associations particulières de technologies différentes ont déjà été publiées. C'est par exemple le cas du document US-A-20100085066 dans lequel une technologie hyperfréquence est combinée avec une technologie à rayons X pour la vérification des bagages dans les aéroports. Dans ce document, la technologie hyperfréquence permet d'augmenter la vitesse d'inspection des bagages. Les bagages sont tout d'abord soumis à une analyse hyperfréquence. Cette analyse permet d'obtenir une image du bagage défilant sur le convoyeur. Cette image est alors comparée à des modèles prédéfinis. Si l'analyse hyperfréquence montre un doute, le bagage est alors soumis à une analyse additionnelle et séparée aux rayons X. L'analyse hyperfréquence d'un point de vue logiciel étant plus facile à mettre en place, cette association de technologies permet d'augmenter la cadence d'inspection car seuls les bagages douteux sont analysés aux rayons X.

Le but essentiel de la présente invention consiste à proposer une solution qui, dans le contexte indiqué au début de la présente, permet d'améliorer de façon notable la qualité de tri et/ou la précision de mesure de certaines caractéristiques ou de certains paramètres d'objets, d'articles ou analogues en défilement, par exemple sur un convoyeur. La solution proposée devrait autoriser également, le cas échéant, une quantification globale du flux, par type de matériau ou par caractéristique à évaluer.

A cet effet, l'invention a pour premier objet un procédé automatique d'inspection et/ou de tri d'objets, articles ou analogues, appartenant à au moins deux catégories différentes et mis à défiler sensiblement en simple couche, par exemple sur un tapis ou un support de transport analogue, procédé caractérisé en ce qu'il consiste à soumettre le flux défilant d'objets, articles ou analogues à au moins deux types différents d'analyse sans contact par rayonnement, dont les résultats sont exploités de manière combinée pour chaque objet, article ou analogue, en vue de réaliser une discrimination parmi ces objets, articles ou analogues et/ou une évaluation d'au moins une caractéristique de ces derniers, les analyses mises en oeuvre comprenant, d'une part, au moins un procédé d'analyse de surface apte à déterminer la composition physique et/ou chimique de la couche supérieure ou externe d'un objet ou analogue exposée au rayonnement utilisé dans ce procédé et, d'autre part, au moins un procédé d'analyse volumique apte à déterminer l'épaisseur équivalente de matière du même objet ou analogue.

Dans la présente, on appelle épaisseur équivalente la quantité totale de matériau présente à la verticale de l'élément de surface, en supposant que le matériau reste le même sous la surface visible, et sans tenir compte des vides éventuels.

L'invention repose par conséquent sur l'utilisation combinée d'au moins une technologie de reconnaissance en surface et d'au moins une technologie d'analyse volumique, résultant en au moins une double analyse appliquée à l'ensemble des objets, articles ou analogue en défilement.

Préférentiellement, l'invention prévoit le traitement des objets, articles ou analogues par un procédé d'analyse de surface et par un procédé d'analyse volumique, lesdits objets, articles ou analogues étant soumis successivement ou simultanément à chacun des deux procédés d'analyse précités durant leur défilement en flux en couche simple.

Ainsi, chaque élément de surface d'un objet ou article qui défile est soumis à deux analyses consécutives ou simultanées : une analyse par l'intermédiaire d'une technologie de reconnaissance en surface, qui permet de déterminer le type de matériau (constitution physique et / ou chimique) et une analyse par l'intermédiaire d'une technologie de mesure volumique, qui permet de déterminer l'épaisseur équivalente de matériau.

Cette combinaison de deux types d'analyse différents, avec une exploitation combinée des informations et données recueillies par les deux analyses, permet de connaître la quantité totale de chaque matériau défilant sur le convoyeur, et donc d'améliorer de façon importante la qualité de tri ou bien la précision de mesure de certains paramètres tels que le taux d'humidité ou la mesure du pouvoir calorifique inférieur (noté PCI). Cette combinaison peut aussi être utilisée pour un grand nombre d'applications telles que la pesée dynamique sans contact.

Le procédé selon l'invention peut, en outre, faire état d'une ou de plusieurs des caractéristiques avantageuses ou des variantes de réalisation suivantes :

- les rayonnements émis durant la mise en oeuvre des procédés d'analyse de surface qui sont appliqués depuis le dessus et des procédés d'analyse de volume qui sont appliqués depuis le dessus ou le dessous, par rapport au flux d'objets, d'articles ou analogue en défilement sur un tapis ou support de transport analogue, la réception des rayonnements s'effectuant au-dessus dudit flux après réflexion ou au-dessous du support après transmission ;
- le procédé d'analyse volumique met en oeuvre des ondes hyperfréquences, préférentiellement dans une plage de fréquences de 1 GHz à 10 THz ;
- le procédé d'analyse volumique met en oeuvre des rayons X en transmission, dans une plage d'énergie comprise entre 2 keV et 100 keV ;
- le procédé d'analyse de surface met en oeuvre un rayonnement infrarouge, et consiste en un procédé d'analyse optique dans le proche ou moyen infra-rouge ou en un procédé d'analyse thermographique dans le moyen infrarouge ;
- le procédé d'analyse de surface est un procédé d'analyse de composition atomique, tel qu'un procédé d'analyse par fluorescence à rayons X ou un procédé d'analyse par spectroscopie de plasma induit par laser.

En outre, le procédé selon l'invention peut consister :

- pour des objets, articles ou analogues fibreux, à déterminer le taux d'humidité à partir des résultats combinés fournis par les procédés d'analyse de surface et volumique, et/ou,
- pour un flux défilant composé de ou intégrant des objets, articles ou analogues en papier et/ou en carton, à réaliser une discrimination en fonction de leur épaisseur totale de matière respective.

Par ailleurs, en accord avec des applications avantageuses du procédé selon l'invention, les résultats des différents types d'analyse peuvent être exploités pour réaliser, préférentiellement sensiblement en temps réel, soit une pesée sans contact du flux défilant d'objets, d'articles ou analogues, soit une évaluation de pouvoir calorifique inférieur du flux défilant d'objets, d'articles ou analogues.

L'invention a également pour objet une installation d'inspection et/ou de tri automatique d'objets, articles ou analogues appartenant à au moins deux classes ou catégories différentes, en particulier pour la mise en oeuvre du procédé décrit précédemment, ladite installation comprenant, d'une part, un moyen pour assurer le défilement sensiblement en simple couche desdits objets ou analogues, par exemple un tapis ou un support de transport analogue, et, d'autre part, au moins deux moyens d'analyse sans contact par rayonnement des objets, articles ou analogues en défilement, installation caractérisée en ce qu'elle comprend en outre un moyen pour l'exploitation combinée des résultats fournis pour chaque objet, article ou analogue par les moyens d'analyse de types différents, en vue de réaliser une discrimination parmi ces objets ou analogue et/ou une évaluation d'au moins une caractéristique de ces derniers et en ce que lesdits moyens d'analyse comprennent, d'une part, au moins un moyen d'analyse de surface apte à déterminer la composition physique et/ou chimique de la couche supérieure ou externe d'un objet ou analogue exposée au rayonnement de ce moyen et, d'autre part, au moins un moyen d'analyse volumique apte à déterminer l'épaisseur équivalente de matière du même objet ou analogue.

Les informations provenant des différents procédés d'analyse sont enregistrées de façon indépendante dans une unité de traitement puis mises en commun. L'unité de traitement permet de synchroniser temporellement les données et ainsi de rétablir la cohérence longitudinale entre les pixels issus des capteurs des deux moyens d'analyse, si les informations issues desdits capteurs sont obtenues de façon consécutive et non simultanée. Si la résolution latérale des pixels diffère d'un capteur à l'autre, alors ces deux résolutions peuvent être harmonisées en dégradant, grâce au système de calcul, la résolution d'un ou des deux capteurs, préférentiellement de sorte à ce que la résolution des deux pixels combinés corresponde à l'espacement séparant deux organes d'éjection consécutifs.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

la figure 1 est une représentation en perspective, partielle et simplifiée, d'une installation selon un mode de réalisation préféré de l'invention ;

la figure 2 est une représentation simplifiée en perspective d'un moyen ou système d'analyse volumique à ondes hyperfréquences pouvant faire partie de l'installation représentée figure 1 ;

les figures 3 et 4 sont des représentations simplifiées en coupe, selon une direction perpendiculaire à la direction du défilement, du moyen d'analyse à ondes hyperfréquences représenté figure 2, illustrant plus en détail respectivement le réseau d'antennes de réception (figure 3) et le réseau d'antennes d'émission (figure 4) ;

la figure 5 est une représentation simplifiée en perspective d'un moyen d'analyse de surface basé sur un procédé d'analyse thermographique, préférentiellement dans le moyen infrarouge, pouvant faire partie de l'installation représentée figure 1 ;

la figure 6 est une représentation simplifiée en perspective d'un moyen d'analyse de surface basé sur un procédé d'analyse spectroscopique ou optique dans le proche infra-rouge, pouvant faire partie de l'installation représentée figure 1 ;

la figure 7 est une représentation simplifiée en perspective d'un moyen d'analyse de surface basé sur un procédé d'analyse volumique par utilisation de rayons X en transmission, pouvant faire partie de l'installation représentée figure 1, et,

la figure 8 est un ordinogramme décisionnel correspondant à l'exploitation combinée des résultats d'analyses de surface et volumique pour le tri d'un flux hétérogène papiers/cartons/magazines.

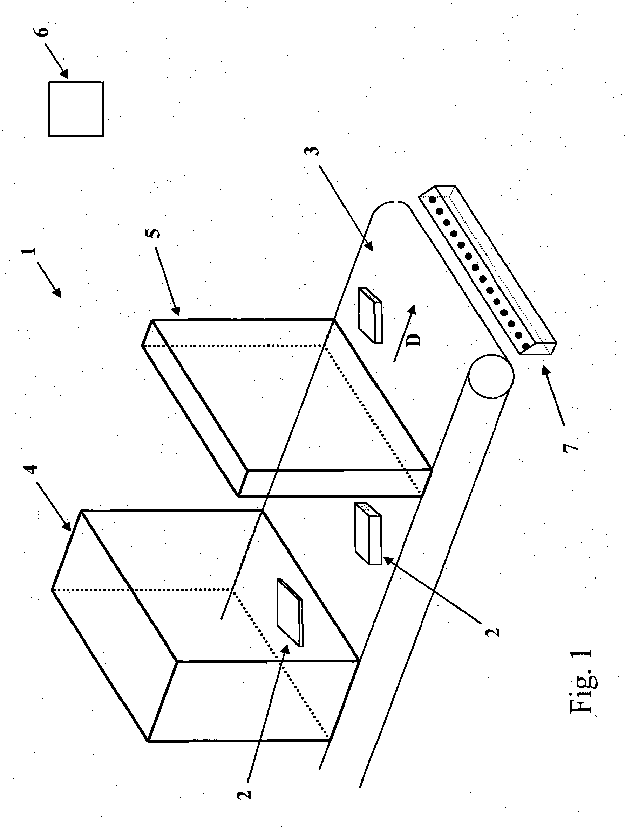

La figure 1 des dessins annexés illustre, à titre d'exemple et de manière simplifiée, une installation 1 d'inspection et/ou de tri automatique d'objets, articles ou analogues 2 appartenant à au moins deux classes ou catégories différentes. Ladite installation 1 comprend, d'une part, un moyen 3 pour assurer le défilement sensiblement en simple couche desdits objets ou analogues 2, par exemple un tapis ou un support de transport analogue, et, d'autre part, au moins deux moyens 4 et 5 d'analyse sans contact par rayonnement des objets, articles ou analogues 2 en défilement.

Conformément à l'invention, cette installation 1 comprend en outre un moyen 6 pour l'exploitation combinée des résultats fournis pour chaque objet, article ou analogue 2 par les moyens d'analyse 4, 5 de types différents, en vue de réaliser une discrimination parmi ces objets ou analogue et/ou une évaluation d'au moins une caractéristique de ces derniers et en ce que lesdits moyens d'analyse 4, 5 comprennent, d'une part, au moins un moyen 4 d'analyse de surface apte à déterminer la composition physique et/ou chimique de la couche externe d'un objet ou analogue 2 exposée au rayonnement de ce moyen et, d'autre part, au moins un moyen d'analyse volumique apte à déterminer l'épaisseur équivalente de matière du même objet ou analogue 2.

Bien que sur la figure 1, l'installation 1 mette en oeuvre deux analyses consécutives (les capteurs des moyens d'analyses 4 et 5 étant décalés spatialement dans la direction de défilement des objets 2), il est également possible que ces deux analyses soient effectuées simultanément (zones d'analyses des capteurs confondues ou comprises l'une dans l'autre).

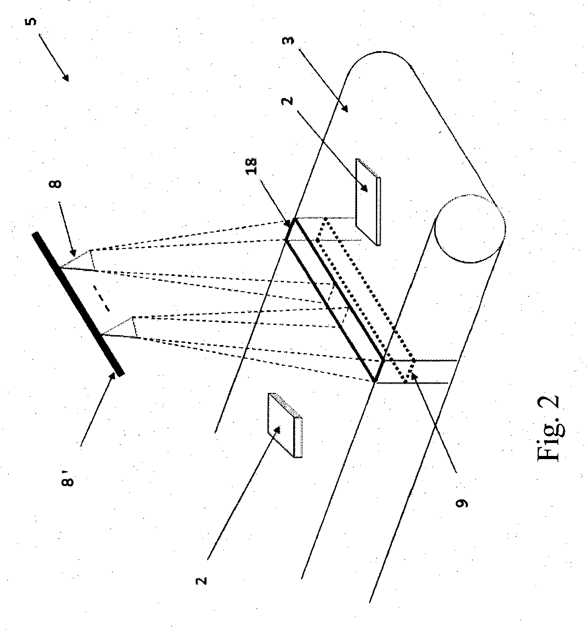

Comme le montrent schématiquement les figures 2 à 4 et 7 des dessins annexés, le moyen 5 d'analyse volumique peut être avantageusement choisi dans le groupe formé par les moyens d'analyse par ondes hyperfréquences et les moyens d'analyse par rayons X en transmission, le support de transport 3 étant préférentiellement sensiblement transparent pour le rayonnement mis en oeuvre.

Préférentiellement, le moyen 5 d'analyse volumique mettant en oeuvre des ondes hyperfréquences, préférentiellement dans une plage de fréquences de 1 GHz à 10 THz, comprend au moins un réseau d'antennes émettrices 8

et au moins un réseau d'antennes de réception 9, l'ensemble fonctionnant à une fréquence de travail définie dans la plage de fréquence précédente, par exemple du type antennes planaires, alignées selon une direction perpendiculaire à la direction D de défilement des objets ou analogues 2 à inspecter ou à trier, les antennes de réception 9 étant disposées sous le support de transport 3.

Selon une variante de réalisation optimisée, le moyen 5 d'analyse volumique à ondes hyperfréquences comprend au moins deux réseaux d'antennes d'émission 8 et de réception 9, les paires appariées de réseaux 8, 9 opérant à des fréquences de travail différentes, le rapport entre ces fréquences de travail étant au moins égal à deux.

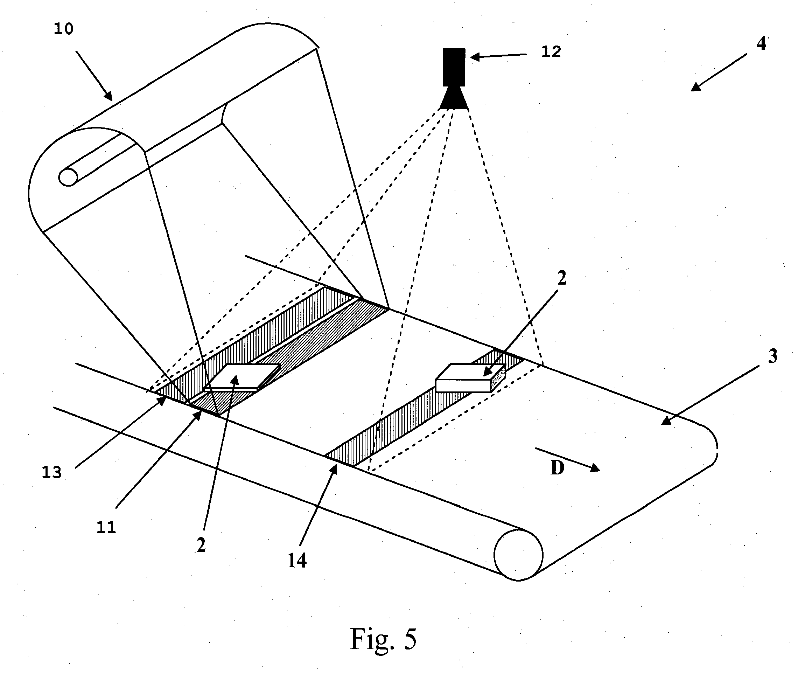

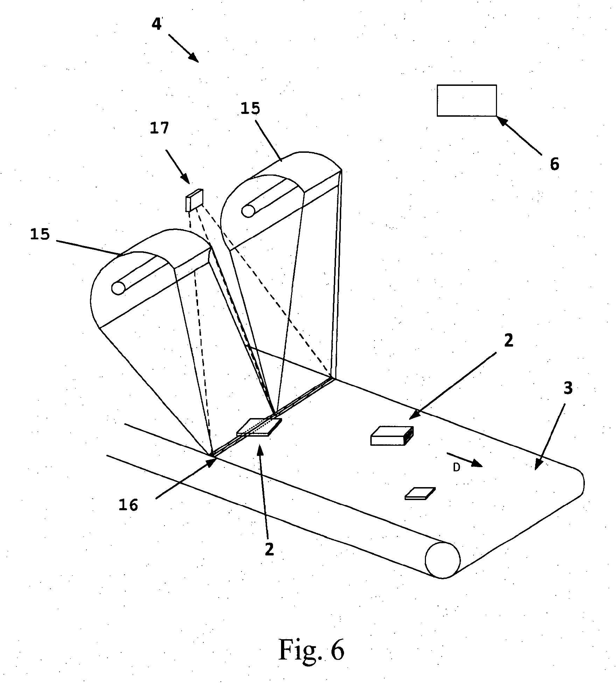

En outre, et comme représenté figures 5 et 6, à titre d'exemples, le moyen 4 d'analyse de surface peut être avantageusement choisi dans le groupe formé par les moyens d'analyse optique proche ou moyen infrarouge, les moyens d'analyse par thermographie moyen infra-rouge, les moyens d'analyse par fluorescence à rayons X et les moyens d'analyse par spectroscopie de plasma induit par laser, le support de transport 3 fournissant le cas échéant un arrière plan contrasté par rapport aux objets ou analogues 2 pour le rayonnement d'analyse considéré.

Bien entendu, l'installation 1 comprend en outre des moyens additionnels (matériels et logiciels), en particulier de collecte et de traitement des résultats fournis par les moyens d'analyse 4 et 5, permettant la mise en oeuvre des différentes opérations du procédé décrit ci-dessus.

Dans ce qui suit, différentes variantes de réalisation de l'installation et du procédé selon l'invention sont décrites plus en détail, mais de manière non limitative, en relation avec les dessins annexés.

Comme le montre la figure 1 et comme déjà indiqué, le procédé selon l'invention consiste essentiellement à soumettre un objet 2 défilant sur un tapis 3 à au moins deux analyses différentes. La première analyse est une analyse de surface basée sur l'utilisation d'un système d'analyse de surface 4. Il est possible de soumettre l'objet 2 à plusieurs analyses de surface afin d'améliorer encore la caractérisation. La seconde analyse basée sur l'utilisation d'un système de mesure en volume 5 permet d'analyser l'objet 2 sur toute son épaisseur. De même, il est possible de soumettre l'objet 2 à plusieurs analyses de mesure de volume pour une meilleure précision de mesure.

Comme indiqué précédemment, la technologie de mesure en volume peut être de différents types, comme par exemple les hyperfréquences, les rayons X ou les rayons Gamma. L'ordre des analyses peut être quelconque. Les données recueillies par les différentes analyses sont ensuite mises en commun dans une unité de traitement 6, par exemple une unité de traitement informatique, puis analysées afin de déterminer les caractéristiques de l'objet 2. Un système d'éjection 7 peut être prévu, qui permet de séparer, le cas échéant, les objets en deux catégories ou plus.

Dans la suite de cette description, la réalisation préférentielle choisie du système de mesure volumique 5 sera la technologie hyperfréquence ou à rayons X.

Le système d'analyse de surface 4 peut mettre en oeuvre, suivant l'application visée, une analyse optique par spectroscopie infrarouge, UV/visible et/ou une analyse thermographique. Ces exemples ne sont bien entendu pas limitatifs. Dans tous les cas, toute une largeur du tapis 3 est soumise à un rayonnement électromagnétique issu d'une source placée au-dessus, et générant un signal en retour vers un détecteur placé également au-dessus : cette configuration est dite en rétrodiffusion. Du fait de la faible épaisseur de pénétration de l'onde en surface, ces technologies permettent seulement d'analyser l'objet 2 en surface. Par cette analyse, on peut déterminer le type de matériaux qui défile sur le tapis 3. Par exemple, une technologie de spectroscopie utilisant le proche infrarouge peut permettre la reconnaissance de différents plastiques (PET, PETG, ABS, PS, etc.), avec une pénétration de 1 à quelques mm. Une technologie de thermographie avec radiation thermique dans le moyen infra-rouge a une pénétration inférieure à 100 $\mu$m. Elle permet par exemple de différencier différents types de papiers (papier A4 type photocopieuse, carton brun ondulé, cartonnettes, etc.).

Lors de l'analyse thermographique (technologie connue en elle-même) par un système 4 adapté de la figure 5, une source de chaleur 10 permet d'envoyer une radiation thermique sur une zone 11. Lorsque l'objet 2 traverse cette zone 11, la couche supérieure de l'objet 2 subit un échauffement. Une caméra thermique 12 mesure l'échauffement entre une zone 13 avant l'irradiation, et une zone 14 après l'irradiation. Suivant la composition de l'objet, celui-ci aura un échauffement différent. Par exemple, pour un flux papier/carton, les papiers, plus fins, seront plus échauffés que les cartons, ce qui permet de les différencier.

Lors de l'utilisation d'un système 4 d'analyse par spectroscopie infrarouge (figure 6 - connue en tant que telle), une source de lumière infrarouge 15 permet d'envoyer un rayonnement infrarouge dans une zone 16. Tous les objets 2 qui défilent sur le tapis 3 sont soumis à ce rayonnement. Un système 17 d'acquisition permet de balayer le tapis 3 et d'observer le spectre de chaque objet 2. Une unité centrale 6 permet de recueillir et de traiter les informations. Chaque matériau constitutif des objets 2 a une réponse spectrale différente ce qui permet, par comparaison à des modèles enregistrés dans une base de données, de déterminer la nature du matériau de l'objet 2 en défilement.

L'analyse volumique peut être basée sur l'utilisation d'un système 5 hyperfréquence (figure 2) qui permet d'analyser l'objet 2 dans toute son épaisseur. L'objet 2 est illuminé par un faisceau d'ondes hyperfréquences émis par des antennes 8, de type cornet de préférence, soutenues par un support 8'. L'onde se propage alors du réseau d'antennes d'émission 8 vers le réseau d'antennes de réception 9. Lorsque l'objet 2 passe dans la zone 18, il modifie l'amplitude et la phase des ondes hyperfréquences captées par le réseau d'antennes 9. L'onde est d'autant plus atténuée que la tangente de perte de l'objet 2 est importante et d'autant plus ralentie (ou déphasée) que sa permittivité relative est forte. Le réseau d'antennes en émission 8 est situé à une distance du tapis 3 permettant le passage libre des objets 2 défilant sur le tapis 3, soit de préférence une distance de 150 à 300 mm.

Chaque antenne 8 du réseau d'émission illumine une largeur raisonnable de tapis 3 et est donc espacée d'une distance définie qui dépend de paramètres comme la fréquence, le type d'antenne et le gain de l'antenne. Par exemple, à 10 GHz, les antennes d'émission 8 sont espacées de préférence de telle sorte que chaque antenne illumine une largeur de 20 cm de tapis ou plus.

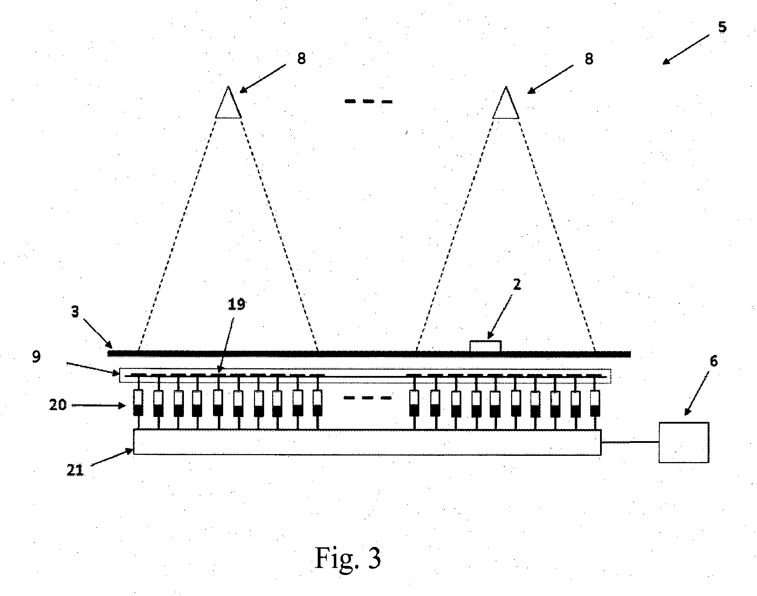

Le réseau d'antennes en réception 9 (figure 3), placé sous le tapis 3, est constitué d'antennes planaires 19 dites "antennes patch" espacées de telle sorte qu'il n'y ait pas de diaphonie entre les antennes. En série avec chaque antenne 19 est connecté un système de détection 20 qui permet de connaître le module et / ou la phase du signal. Le système de détection 20 est par exemple un corrélateur complexe tel que décrit dans « The Six-port Reflectometer : an Alternative NetworkAnalyser » (le réflectomètre à six ports : un analyseur de réseau alternatif), Glenn F. Enguen, IEEE transactions on Microwave Theory and Techniques, vol. 25, n°12, décembre 1977. La mesure de phase peut aussi se faire à l'aide d'un système asservi qui superpose le signal d'émission et le signal de réception après un prétraitement qui égalise leurs amplitudes. Lorsqu'un objet passe dans la zone 18, le module et la phase de chaque signal sont modifiés. Ces données, mesurées à l'aide du système de détection 20, sont mises en forme à l'aide d'un circuit analogique 21, puis transmises et traitées par une unité centrale 6.

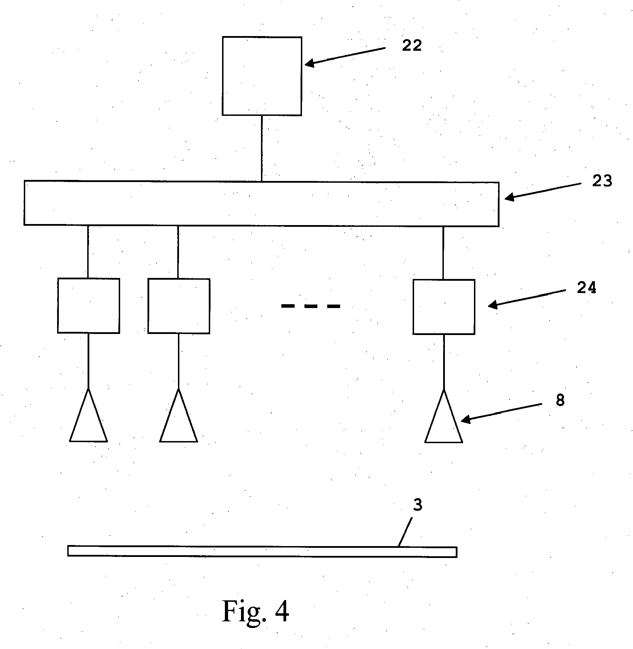

Le signal hyperfréquence provient d'une source 22 (figure 4) à la fréquence choisie pouvant aller de quelques Gigahertz à quelques Térahertz. Ce signal est alors divisé en autant de voies qu'il est nécessaire, à l'aide de diviseurs de puissance 23, pour permettre une illumination optimale du tapis. Un amplificateur 24 placé en amont de chaque antenne 8 permet d'amplifier le signal. Suivant la fréquence de la source 22, il est possible de n'utiliser qu'un seul amplificateur placé entre la source 22 et le diviseur 23. La plage de détection du système hyperfréquence 5 est d'autant plus large que la puissance émise est importante. Une puissance de 10mW à l'entrée de chaque antenne 8 est appropriée pour une fréquence d'utilisation de 10GHz et pour un réseau d'antennes placées à 30 cm du tapis 3.

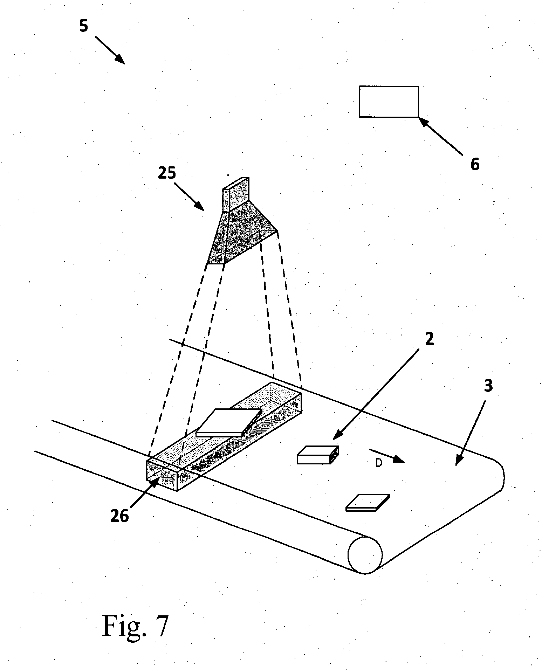

Un second type système d'analyse en volume 5 (figure 7) peut aussi être réalisé à l'aide d'une technologie à rayons X. Dans ce cas, une source 25 permet d'émettre des rayons X sur une largeur de tapis 3. Les rayons qui passent au travers des objets 2 et du tapis 3 sont captés par un détecteur 26. Cette technologie de mesure est sensible à l'épaisseur traversée de l'objet 2 qui défile sur le tapis 3. Ainsi, il est possible de dissocier un objet épais d'un objet qui l'est moins en connaissant le matériau constitutif de ces objets 2. Cette dernière information est donnée par l'analyse de surface 4.

La puissance de l'onde au travers de l'objet 2 décroit de façon proportionnelle à exponentielle de ($\alpha$ * $l$) où $\alpha$ représente le coefficient d'absorption du matériau et $l$ représente l'épaisseur du matériau. $\alpha$ est déterminé grâce à l'utilisation de la technologie de reconnaissance en surface 4. Connaissant $\alpha$, on peut alors déterminer $l$ grâce à la mesure de la puissance transmise des rayons X ou des ondes hyperfréquences de l'émission 25 à la réception 26.

Enfin, il est nécessaire de combiner les informations issues des systèmes d'analyse en surface 4 et d'analyse en volume 5. La mise en commun de ces données est réalisée à l'aide d'une unité centrale 6. Ainsi, la combinaison des systèmes 4 et 5 permet d'améliorer la caractérisation et la différenciation des objets 2 défilant sur le tapis 3. Suivant l'application envisagée de la combinaison des deux technologies, la mise en commun des données se fait différemment. Par exemple, pour l'application de mesure de masse ou PCI, la technologie de reconnaissance en surface donne l'information sur le type de matériau de l'élément de surface analysé, et la seconde analyse donne la quantité de matière située à la verticale de cet élément de surface. La combinaison de ces deux informations permet de calculer le poids ou le PCI des objets 2.

Grâce à la description précédente, l'homme du métier comprend aisément les améliorations apportées par la combinaison des deux technologies indiquées.

Un exemple pratique d'application de l'invention est décrit dans l'exposé qui suit, en particulier en relation avec les problèmes liés au tri des papiers qui sont décrits dans l'état de l'art (limitation lors de la différenciation cartonnette/magazine). Si deux objets 2 présentent des couches superficielles similaires, il a été constaté que le système d'analyse en surface 4 seul n'est pas suffisant. Dans le cas de l'exemple d'un flux papier/carton, il est difficile de faire la différence entre une couverture épaisse d'un magazine et une cartonnette (carton plat, de valorisation médiocre). Or, dans des applications de tri sélectif, les magazines représentent une source importante de papier à valoriser.

En mettant en oeuvre le seul système d'analyse 4 présenté ci-dessus, les magazines à couverture épaisse sont considérés comme des cartonnettes et ne sont donc pas valorisés au mieux. Dans ce cas, le système hyperfréquence 5, utilisé en mode lecture du module seulement, permet de réaliser cette discrimination cartonnette/magazine.

En effet, lorsque l'objet 2 (cartonnette ou magazine) traverse la zone 18, les pertes mesurées seront plus importantes si l'objet 2 est un magazine que s'il est une cartonnette. Le magazine étant plus épais (en moyenne : masse surfacique = 5 kg/m$^2$), les ondes hyperfréquences doivent traverser plus de matière, elles sont de ce fait plus atténuées que pour une cartonnette (en moyenne : masse surfacique = 1 kg/m$^2$). L'évolution des pertes mesurées est du type : $P(dB) = \alpha(f) \times e$ où $e$ représente l'épaisseur équivalente de cellulose en mm et $\alpha(f)$ représente les pertes liées à un matériau en dB/mm et dépend de la fréquence *f* de travail. Par exemple, à 25 GHz, $\alpha$ (25 GHz) = 0,3 dB/mm. De manière générale, un magazine qui a une épaisseur de 5 mm (120 pages) génère environ 1,5 dB de pertes. En revanche, une cartonnette type calendrier (épaisseur 2 mm) ne génère qu'environ 0,6 dB de pertes. Ainsi, alors qu'il n'était pas possible de différencier une cartonnette d'un magazine à l'aide du seul système d'analyse en surface 4, il est possible de réaliser cette différenciation en mettant en oeuvre de manière additionnelle le système hyperfréquence 5.

Par exemple, en posant une limite de pertes de 0,7 dB, on peut considérer que tout objet 2 qui génère des pertes supérieures à cette limite est un magazine. Dans le cas contraire, on le considère comme une cartonnette.

Plus généralement, la description de la variante pratique qui précède s'applique à la distinction d'objets 2 à base cellulosique qui diffèrent entre eux par l'épaisseur totale de matière présente.

Le système d'analyse volumique 5 permet aussi l'amélioration de la différenciation de produits en présence d'humidité. On peut expliquer cette application à l'aide du système hyperfréquence. Ce système permet de contrôler si l'objet 2 qui circule sur le tapis 3 est humide ou non. En effet, un matériau mouillé génère des pertes plus importantes (l'eau ayant un fort coefficient d'absorption aux hyperfréquences) et génère aussi un plus grand retard sur l'onde (l'eau ayant une forte permittivité aux hyperfréquences).

Le déphasage d'une onde se propageant dans un milieu de permittivité relative $\varepsilon_r$ peut s'écrire sous la forme :

$$\Phi = \frac{2\pi f \sqrt{\varepsilon_r}}{c} \times d$$

où $\Phi$ s'exprime en radian, *f* représente la fréquence du signal, *c* représente la vitesse de la lumière dans le vide et *d* représente la distance de propagation dans l'objet.

Si l'on considère un déplacement de l'onde sur une distance de 1mm, on obtient alors les déphasages suivants :

- pour une propagation dans l'air ($\varepsilon_r$ = 1), et à 10GHz, $\Phi$ = 12°.
- pour une propagation dans du bois sec ($\varepsilon_r$ = 1,8), et à 10GHz, $\Phi$ = 16,1°.
- pour une propagation dans du papier sec ($\varepsilon_r$ = 2,1), et à 10GHz, $\Phi$ = 17,1°.
- pour une propagation dans de l'eau ($\varepsilon_r$ = 30), et à 10GHz, $\Phi$ = 65°.

On s'aperçoit que l'eau génère un déphasage environ quatre fois plus important que celui généré par du bois ou du papier secs. Par contre, son absorbance est quarante fois plus importante que pour le bois ou le papier. Comme ces deux ratios sont différents, il est possible, en connaissant le module et la phase du signal de l'onde, de reconnaître les matériaux humides, voire même de mesurer leur taux d'humidité. En connaissant l'information sur l'humidité du matériau (fournie par le système 5 hyperfréquence), ainsi que le comportement thermique de différents flux en fonction de l'humidité, une correction peut être apportée à la mesure réalisée par le système de thermographie 4 pour améliorer la discrimination.

Le tableau suivant donne une estimation de la phase et des pertes mesurées pour deux types d'échantillons et deux taux d'humidité à une fréquence 10 GHz :

| Type de matériaux | Caractéristiques | Phase mesurée | Pertes mesurées | Rapport Phase/Pertes |
|---|---|---|---|---|
| Magazine de 5 mm d'épaisseur | Mouillé à 20 % | 150 ° | 6.8 dB | 22 |
| | Sec | 85 ° | 0.7 dB | 121 |
| Cartonnette de 1 mm d'épaisseur | Mouillé à 20 % | 30 ° | 1.2 dB | 25 |
| | Sèche | 17 ° | 0.14 dB | 121 |

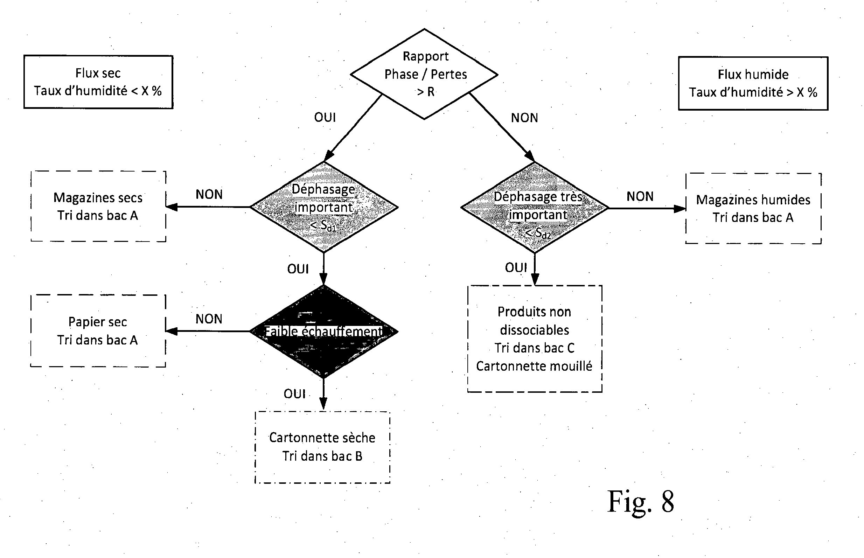

Pour différencier les objets 2 entre eux, qu'ils soient mouillés ou secs, l'unité de traitement 6 peut par exemple exécuter les instructions indiquées dans l'ordinogramme sous forme de schéma bloc de la figure 8 :

→ Si le rapport Phase/Perte est inférieur à une certaine valeur R (fonction de la fréquence, par exemple 100 à 10 GHz), alors le taux d'humidité est supérieur à X %, X étant généralement égal à environ 10 %. Dans ce cas, on mesure la valeur du déphasage. Si celui-ci est supérieur à une valeur seuil $S_{d2}$ (dépend de la fréquence, par exemple 120° à 10 GHz), alors l'objet 2 sous test est un magazine humide et sera placé dans le bac A des produits à valoriser. Sinon, cela signifie qu'il n'est pas possible de déterminer de façon précise la nature de l'objet 2 et ce dernier sera alors placé dans le bac C des produits contaminants (cartonnette mouillées).

→ Si le rapport Phase/Perte est supérieur à une certaine valeur R (par exemple 100 à 10 GHz) alors le taux d'humidité du flux est inférieur à X %. On mesure alors la phase du signal. Si cette phase est :

- supérieure à une valeur seuil $S_{d1}$ (par exemple 70° à 10 GHz), alors l'objet 2 qui défile sur le tapis 3 est un magazine sec. Il sera alors placé dans le bac A.
- inférieure à une valeur seuil $S_{d1}$, on soumet l'objet 2 à une analyse de thermographie. Si on mesure :
- un fort échauffement, l'objet 2 est du papier sec. Il sera alors placé dans le bac A.
- un faible échauffement, l'objet est une cartonnette sèche. Il sera placé dans le bac B.

Comme cela ressort de l'application précédente, le système hyperfréquence 5 permet la mesure du taux d'humidité. Ainsi, en considérant ce système seul, il devient possible de mesurer le taux d'humidité d'un flux d'objets 2 ayant un taux d'humidité inférieur à 20 % qui défile sur le tapis 3. La mesure du rapport phase/pertes (degré/dB) donne, par l'intermédiaire d'une courbe de référence, le taux d'humidité pour des taux d'humidité inférieurs à 20 %. Au-delà de 20 % d'humidité, la variation du rapport phase / pertes devient trop faible par rapport à la variation du taux d'humidité. Pour une mesure d'humidité supérieure à 20 %, on utilise une technologie de reconnaissance en surface NIR. En combinant ces deux technologies, on obtient alors une mesure du taux d'humidité pour des matériaux ayant entre 0 et 100 % d'humidité.

Une autre application de la présente invention, utilisant la combinaison d'un système de reconnaissance en surface 4 et d'un système de mesure de volume 5, est la réalisation d'une pesée sans contact. Cette application porte préférentiellement sur l'utilisation du système 5 hyperfréquence ou à rayons X avec le système de reconnaissance en surface 4 par spectroscopie infrarouge ou fluorescence à rayons X.

Dans cette application, le système de reconnaissance en surface 4, par exemple par spectroscopie infrarouge, permet de déterminer le matériau *i* constitutif de l'élément de surface *dS* de l'objet 2 qui défile sur le tapis 3.

Ensuite le système de mesure volumique 5 réalise une mesure des pertes en transmission dues à l'objet 2 qui défile sur le tapis 3. A chaque matériau *i* est associée une absorbance $A_i$ (exprimée en dB/(kg /m$^2$) pour une technologie hyperfréquence), ce coefficient dépendant principalement de la densité de l'objet.

C'est donc à partir de la mesure des pertes *p* qu'il est possible d'estimer la masse du flux qui défile sur le tapis 3. A chaque surface unitaire *dS* mesurée par le boitier 14 est associée une masse $dM_i = p.dS/A_i$. Une unité centrale 6 permet finalement de faire la somme des masses élémentaires mesurées et donc d'estimer la masse totale du flux défilant sur le tapis, ainsi que la masse totale de chaque matériau, et donc les proportions massiques du flux.

Dans le cas d'une technologie de reconnaissance volumique hyperfréquence, les coefficients appliqués dépendent de la fréquence de travail du système 5 de mesure volumique.

Ainsi, un objet 2 fin nécessitera une analyse à haute fréquence (une fréquence de 90 GHz est adaptée pour une épaisseur d'objets de l'ordre de 0,2 mm ou plus) et un objet épais nécessitera une analyse à basse fréquence (une fréquence de 10 GHz est adaptée pour une épaisseur d'objets de l'ordre de 2 mm ou plus).

Dans le cas où le flux qui défile sur le tapis 3 présente des objets 2 de différentes épaisseurs, le système hyperfréquence 5 peut être composé de deux réseaux d'antennes 8 et 9, chaque réseau d'antennes possédant alors une fréquence de travail différente. Deux absorbances sont ainsi affectées à chaque type de matériaux, une pour chaque fréquence de travail.

De l'application de pesée sans contact résultent différentes applications telles que la mesure du pouvoir calorifique inférieur et supérieur, la mesure du potentiel de bio-méthanisation, la mesure de la proportion d'une caractéristique dans un matériau telle que le taux de chlore, etc.

Par exemple, dans le cas du pouvoir calorifique inférieur (PCI), le principe reste le même que pour la pesée sans contact sauf que cette fois-ci, on associe le PCI Ci du matériau i en MJ/kg à chaque matériau. Le PCI *dC* de chaque pixel est alors $dC = C_i.dM_i$, où $dM_i$ est calculé par la formule précédente. On obtient alors la mesure du PCI d'un flux d'objets 2 en sommant les PCI de tous les pixels du flux qui défile sur le tapis 3.

Compte tenu des caractéristiques évoquées dans la présente, des caractéristiques additionnelles divulguées dans les différents documents cités en introduction concernant les technologies connues d'analyse de surface et volumique et des connaissances de l'homme du métier, il n'est pas nécessaire de décrire davantage les moyens mis en oeuvre par l'invention.

Il ressort de ce qui précède que la présente invention concerne l'application de la combinaison d'au moins deux technologies (au moins une technologie d'analyse en surface et au moins une technologie de mesure volumique) pour la caractérisation et / ou le tri en temps réel d'objets 2 et notamment :

- l'amélioration de la distinction de cartonnettes / magazines.
- la mesure du taux d'humidité global d'un matériau.
- la pesée sans contact d'un flux d'objets hétérogènes.
- la mesure du pouvoir calorifique inférieur d'un flux d'objets hétérogènes.

- la mesure du pouvoir calorifique supérieur d'un flux d'objets hétérogènes.
- la mesure du potentiel de bio-méthanisation d'un flux d'objets hétérogènes.
- la mesure du taux de chlore, etc.

A cet effet, l'invention met en oeuvre une mesure de surface pour caractériser et / ou trier des objets présentant des absorptions différentes grâce à l'utilisation de la technologie de reconnaissance en surface et une technologie de mesure volumique qui analyse l'objet dans toute son épaisseur. Différents types d'analyses de surface peuvent être utilisés comme par exemple la thermographie ou la spectroscopie par infrarouge, ou la spectroscopie UV/visible. Le but de l'analyse en surface est de déterminer le type de matériau qui défile sur le tapis.

Pour l'analyse en volume, il est par exemple possible d'utiliser des ondes à rayons X, rayons Gamma ou hyperfréquences. La réponse de ces technologies dépend de l'épaisseur équivalente du matériau traversé, c'est-à-dire l'épaisseur que présenterait le matériau en l'absence de vides éventuels.

La combinaison des technologies de reconnaissance en surface et de mesure de volume a pour but principal d'augmenter la pureté et la qualité du tri en temps réel et d'améliorer la caractérisation des objets défilants, notamment la mesure de la masse.

En connaissant la nature du matériau, on connait ses propriétés telles que l'absorbance et le déphasage par unité d'épaisseur et la densité de ce matériau. La combinaison de l'information de surface avec la quantité de matière présente par unité de surface permet d'estimer la masse de l'objet. On peut ainsi réaliser une pesée sans contact. En multipliant les masses des objets par le PCI de leur matériau constitutif, on obtient le PCI total de ce matériau dans le flux.

L'information de la masse est par exemple nécessaire à l'exploitant d'un centre de tri pour la gestion en temps réel du site. L'information sur le PCI d'une certaine quantité d'objets permet de connaitre par exemple l'énergie qui sera dégagée par ces objets s'ils sont valorisés thermiquement, c'est-à-dire incinérés avec récupération d'énergie.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

**Revendications**

1. Procédé automatique d'inspection et/ou de tri d'objets, articles ou analogues, appartenant à au moins deux catégories différentes et mis à défiler sensiblement en simple couche, par exemple sur un tapis ou un support de transport analogue, procédé **caractérisé en ce qu'**il consiste à soumettre le flux défilant d'objets, articles ou analogues (2) à au moins deux types différents d'analyse sans contact par rayonnement, dont les résultats sont exploités de manière combinée pour chaque objet, article ou analogue (2), en vue de réaliser une discrimination parmi ces objets, articles ou analogues (2) et/ou une évaluation d'au moins une caractéristique de ces derniers, les analyses mises en oeuvre comprenant, d'une part, au moins un procédé d'analyse de surface apte à déterminer la composition physique et/ou chimique de la couche externe ou supérieure d'un objet ou analogue (2) exposée au rayonnement utilisé dans ce procédé et, d'autre part, au moins un procédé d'analyse volumique apte à déterminer l'épaisseur équivalente de matière du même objet ou analogue (2).

2. Procédé selon la revendication 1, **caractérisé en ce qu'**il comprend le traitement des objets, articles ou analogues (2) par un procédé d'analyse de surface et par un procédé d'analyse volumique, lesdits objets, articles ou analogues (2) étant soumis, successivement ou simultanément, à chacun des procédés d'analyse durant leur défilement en flux en couche simple.

3. Procédé selon l'une quelconque des revendications 1 et 2, **caractérisé en ce que** le procédé d'analyse volumique met en oeuvre des ondes hyperfréquences, préférentiellement dans une plage de fréquences de 1 GHz à 10 THz.

4. Procédé selon l'une quelconque des revendications 1 et 2, **caractérisé en ce que** le procédé d'analyse volumique met en oeuvre des rayons X en transmission, dans une plage d'énergie comprise entre 2 keV et 100 keV.

5. Procédé selon l'une quelconque des revendications 1 à 4, **caractérisé en ce que** le procédé d'analyse de surface met en oeuvre un rayonnement infrarouge, et consiste en un procédé d'analyse optique dans le proche ou moyen infra-rouge ou en un procédé d'analyse thermographique dans le moyen infra-rouge.

6. Procédé selon l'une quelconque des revendications 1 à 4, **caractérisé en ce que** le procédé d'analyse de surface est un procédé d'analyse de composition atomique, tel que par exemple un procédé d'analyse par fluorescence à rayons X ou

un procédé d'analyse par spectroscopie de plasma induit par laser.

7. Procédé selon l'une quelconque des revendications 1 à 6, **caractérisé en ce qu'**il consiste, pour des objets, articles ou analogues (2) fibreux, à déterminer le taux d'humidité à partir des résultats combinés fournis par les procédés d'analyse de surface et volumique.

8. Procédé selon l'une quelconque des revendications 1 à 7, **caractérisé en ce qu'**il consiste, pour un flux défilant composé de ou intégrant des objets, articles ou analogues (2) en papier et/ou en carton, à réaliser une discrimination en fonction de leur épaisseur totale de matière respective.

9. Procédé selon l'une quelconque des revendications 1 à 8, **caractérisé en ce que** les résultats des différents types d'analyse sont exploités pour réaliser, préférentiellement sensiblement en temps réel, une pesée sans contact du flux défilant d'objets, d'articles ou analogues (2).

10. Procédé selon l'une quelconque des revendications 1 à 9, **caractérisé en ce que** les résultats des différents types d'analyse sont exploités pour réaliser, préférentiellement sensiblement en temps réel, une évaluation du pouvoir calorifique inférieur, du pouvoir calorifique supérieur, du potentiel de bio-méthanisation, et/ou du taux de chlore du flux défilant d'objets, d'articles ou analogues (2).

11. Installation d'inspection et/ou de tri automatique d'objets, articles ou analogues appartenant à au moins deux classes ou catégories différentes, en particulier pour la mise en oeuvre du procédé selon la revendication 1, ladite installation comprenant, d'une part, un moyen pour assurer le défilement sensiblement en simple couche desdits objets ou analogues, par exemple un tapis ou un support de transport analogue, et, d'autre part, au moins deux moyens d'analyse sans contact par rayonnement des objets, articles ou analogues en défilement, installation (1) **caractérisée en ce qu'**elle comprend en outre un moyen (6) pour l'exploitation combinée des résultats fournis pour chaque objet, article ou analogue (2) par les moyens d'analyse (4, 5) de types différents, en vue de réaliser une discrimination parmi ces objets ou analogue et/ou une évaluation d'au moins une caractéristique de ces derniers et **en ce que** lesdits moyens d'analyse (4, 5) comprennent, d'une part, au moins un moyen (4) d'analyse de surface apte à déterminer la composition physique et/ou chimique de la couche externe ou supérieure d'un objet ou analogue (2) exposée au rayonnement de ce moyen et, d'autre part, au moins un moyen d'analyse volumique apte à déterminer l'épaisseur équivalente de matière du même objet ou analogue (2).

12. Installation selon la revendication 11, **caractérisée en ce que** le moyen (5) d'analyse volumique est choisi dans le groupe formé par les moyens d'analyse par ondes hyperfréquences et les moyens d'analyse par rayons X en transmission, le support de transport (3) étant préférentiellement sensiblement transparent pour le rayonnement mis en oeuvre.

13. Installation selon la revendication 11 ou 12, **caractérisée en ce que** le moyen (4) d'analyse de surface est choisi dans le groupe formé par les moyens d'analyse optique proche ou moyen infrarouge, les moyens d'analyse par thermographie moyen infra-rouge, les moyens d'analyse par fluorescence à rayons X et les moyens d'analyse par spectroscopie de plasma induit par laser, le support de transport (3) fournissant le cas échéant un arrière plan contrasté par rapport aux objets ou analogues (2) pour le rayonnement d'analyse considéré.

14. Installation selon la revendication 12 ou 13, **caractérisée en ce que** le moyen (5) d'analyse volumique mettant en oeuvre des ondes hyperfréquences, préférentiellement dans une plage de fréquences de 1 GHz à 10 THz, comprend au moins un réseau d'antennes émettrices (8) et au moins un réseau d'antennes de réception (9), l'ensemble fonctionnant à une fréquence de travail définie dans la plage de fréquence précédente, par exemple du type antennes planaires, alignées selon une direction perpendiculaire à la direction (D) de défilement des objets ou analogues (2) à inspecter ou à trier, les antennes de réception (9) étant disposées sous le support de transport (3).

15. Installation selon la revendication 14, **caractérisée en ce que** le moyen (5) d'analyse volumique à ondes hyperfréquences comprend au moins deux réseaux d'antennes d'émission (8) et de réception (9), les paires appariées de réseaux (8, 9) opérant à des fréquences de travail différentes, le rapport entre ces fréquences de travail étant au moins égal à deux.

16. Installation selon l'une quelconque des revendications 11 à 14, **caractérisée en ce qu'**il comprend en outre des moyens additionnels, en particulier de traitement des résultats fournis par les moyens d'analyse (4 et 5), pour la mise en oeuvre du procédé selon l'une quelconque des revendications 7 à 10.

**EP 2 602 030 B1**

**Patentansprüche**

1. Automatisches Prüf- und/oder Sortierverfahren von Gegenständen, Artikeln oder dergleichen, die zu mindestens zwei unterschiedlichen Kategorien gehören und zum Beispiel auf einem Förderband oder einem ähnlichen Transportträger im Wesentlichen in einer einfachen Lage zum Vorbeilaufen angeordnet sind, wobei das Verfahren **dadurch gekennzeichnet ist, dass** es daraus besteht, den Strom vorbeilaufender Gegenstände, Artikel oder dergleichen (2) mindestens zwei unterschiedlichen kontaktlosen Analysearten durch Durchleuchtung zu unterziehen, deren Ergebnisse für jeden Gegenstand, Artikel oder dergleichen (2) kombiniert verwertet werden, um eine Unterscheidung zwischen diesen Gegenständen, Artikeln oder dergleichen (2) und/oder eine Bewertung mindestens einer Eigenschaften von ihnen zu erzielen, wobei die eingesetzten Analysen einerseits mindestens ein Analyseverfahren der Oberfläche, das in der Lage ist, die physikalische und/oder chemische Zusammensetzung der äußeren oder oberen Schicht eines Gegenstands oder dergleichen (2) zu bestimmen, welcher der Strahlung ausgesetzt wird, die in diesem Verfahren verwendet wird, und andererseits mindestens ein Analyseverfahren des Volumens umfassen, das in der Lage ist, die äquivalente Dicke des Werkstoffs desselben Gegenstands oder dergleichen (2) zu bestimmen.

2. Verfahren nach Anspruch 1, **dadurch gekennzeichnet, dass** es die Behandlung der Gegenstände, Artikel oder dergleichen (2) durch ein Analyseverfahren der Oberfläche und durch ein Analyseverfahren des Volumens umfasst, wobei die Gegenstände, Artikel oder dergleichen (2) nacheinander oder gleichzeitig jedem der Analyseverfahren während ihres Vorbeilaufens als Strom in einer einfachen Lage unterzogen werden.

3. Verfahren nach irgendeinem der Ansprüche 1 und 2, **dadurch gekennzeichnet, dass** in dem Analyseverfahren des Volumens Hyperfrequenzwellen vorzugsweise in einem Frequenzbereich von 1 GHz bis 10 THz eingesetzt werden.

4. Verfahren nach irgendeinem der Ansprüche 1 und 2, **dadurch gekennzeichnet, dass** in dem Analyseverfahren des Volumens die Transmission von Röntgenstrahlen in einem Leistungsbereich eingesetzt wird, der zwischen 2 keV und 100 keV liegt.

5. Verfahren nach irgendeinem der Ansprüche 1 bis 4, **dadurch gekennzeichnet, dass** in dem Analyseverfahren der Oberfläche eine Infrarotstrahlung eingesetzt wird, und es aus einem optischen Analyseverfahren im nahen oder mittleren Infrarotbereich oder einem thermografischen Analyseverfahren im mittleren Infrarotbereich besteht.

6. Verfahren nach irgendeinem der Ansprüche 1 bis 4, **dadurch gekennzeichnet, dass** das Analyseverfahren der Oberfläche aus einem Analyseverfahren der atomaren Zusammensetzung, wie beispielsweise einem Analyseverfahren durch Fluoreszenz mit Röntgenstrahlen oder einem Analyseverfahren durch Spektroskopie von durch Laser induziertem Plasma besteht.

7. Verfahren nach irgendeinem der Ansprüche 1 bis 6, **dadurch gekennzeichnet, dass** es für faserartige Gegenstände, Artikel oder dergleichen (2) daraus besteht, den Feuchtigkeitsgehalt ausgehend von den kombinierten Ergebnissen zu bestimmen, die durch die Analyseverfahren der Oberfläche und des Volumens geliefert werden.

8. Verfahren nach irgendeinem der Ansprüche 1 bis 7, **dadurch gekennzeichnet, dass** es daraus besteht, für einen vorbeilaufenden Strom, der aus Gegenständen, Artikeln oder dergleichen (2) aus Papier und/oder Pappe zusammengesetzt ist oder diese beinhaltet, eine Unterscheidung in Abhängigkeit ihrer gesamten Dicke des jeweiligen Werkstoffs vorzunehmen.

9. Verfahren nach irgendeinem der Ansprüche 1 bis 8, **dadurch gekennzeichnet, dass** die Ergebnisse der unterschiedlichen Analysearten verwertet werden, um, vorzugsweise im Wesentlichen in Echtzeit, ein kontaktloses Wiegen des vorbeilaufenden Stroms von Gegenständen, Artikeln oder dergleichen (2) vorzunehmen.

10. Verfahren nach irgendeinem der Ansprüche 1 bis 9, **dadurch gekennzeichnet, dass** die Ergebnisse der unterschiedlichen Analysearten verwertet werden, um, vorzugsweise im Wesentlichen in Echtzeit, eine Bewertung des unteren Heizwertes, des oberen Heizwertes, des Potenzials der Bio-Methanisierung und/oder des Chlorgehalts des Stromes von vorbeilaufenden Gegenständen, Artikeln oder dergleichen (2) vorzunehmen.

11. Automatische Prüf- und/oder Sortieranlage von Gegenständen, Artikeln oder dergleichen, die zu mindestens zwei unterschiedlichen Klassen oder Kategorien gehören, insbesondere zur Anwendung des Verfahrens nach Anspruch 1, wobei die Anlage einerseits ein Mittel, um das Vorbeilaufen der Gegenstände oder dergleichen im Wesentlichen in einer einfachen Lage sicherzustellen, zum Beispiel ein Förderband oder einen ähnlichen Transportträger, und andererseits mindestens zwei kontaktlose Analysemittel durch Durchleuchtung der vorbeilaufenden Gegenstände, Artikel oder dergleichen umfasst, wobei die Anlage (1) **dadurch gekennzeichnet ist, dass** sie darüber hinaus ein Mittel (6) für die kombinierte Verwertung der Ergebnisse, die für jeden Gegenstand, Artikel oder dergleichen (2) durch die Analysemittel (4, 5) unterschiedlicher Arten geliefert werden, um eine Unterscheidung zwischen diesen Gegenständen oder dergleichen und/oder eine Bewertung mindestens einer Eigenschaft von ihnen vorzunehmen, und dadurch, dass die Analysemittel (4, 5) einerseits ein Analysemittel (4) der Oberfläche, das in der Lage ist, die physikalische und/oder chemische Zusammensetzung der äußeren oder oberen Schicht eines Gegenstands oder dergleichen (2) zu bestimmen, welcher der Strahlung dieses Mittels ausgesetzt wird, und andererseits mindestens ein Analysemittel des Volumens umfasst, das in der Lage ist, die äquivalente Dicke des Werkstoffs desselben Gegenstands oder dergleichen (2) zu bestimmen.

12. Anlage nach Anspruch 11, **dadurch gekennzeichnet, dass** das Analysemittel (5) des Volumens aus der Gruppe ausgewählt wird, die aus den Analysemitteln durch Hyperfrequenzwellen und den Analysemitteln durch Transmission von Röntgenstrahlen gebildet wird, wobei der Transportträger (3) vorzugsweise im Wesentlichen für die eingesetzte Strahlung transparent ist.

13. Anlage nach Anspruch 11 oder 12, **dadurch gekennzeichnet, dass** das Analysemittel (4) der Oberfläche aus der Gruppe ausgewählt wird, die aus den optischen Analysemitteln im nahen oder mittleren Infrarotbereich, den Analysemitteln durch Thermografie im mittleren Infrarotbereich, den Analysemitteln durch Fluoreszenz mit Röntgenstrahlen und den Analysemitteln durch Spektroskopie von durch Laser induziertem Plasma ausgebildet wird, wobei der Transportträger (3) im Verhältnis zu den Gegenständen oder dergleichen (2) gegebenenfalls einen kontrastreichen Hintergrund für die Strahlung der berücksichtigen Analyse liefert.

14. Anlage nach Anspruch 12 oder 13, **dadurch gekennzeichnet, dass** das Analysemittel (5) des Volumens, bei dem Hyperfrequenzwellen vorzugsweise in einem Frequenzbereich von 1 GHz bis 10 THz eingesetzt werden, mindestens ein Netz mit Sendeantennen (8) und mindestens ein Netz mit Empfangsantennen (9) umfasst, wobei die Gesamtheit mit einer Arbeitsfrequenz funktioniert, die in dem vorhergehenden Frequenzbereich definiert ist, beispielsweise in der Art von Planarantennen, die in einer senkrechten Richtung zur Durchlaufrichtung (D) der zu prüfenden oder zu sortierenden Gegenstände oder dergleichen (2) ausgerichtet sind, wobei die Empfangsantennen (9) unter dem Transportträger (3) angeordnet sind.

15. Anlage nach Anspruch 14, **dadurch gekennzeichnet, dass** das Analysemittel (5) des Volumens mit Hyperfrequenzwellen mindestens zwei Netze mit Sende- (8) und Empfangsantennen (9) umfasst, wobei die gepaarten Netzpaare (8, 9) bei unterschiedlichen Arbeitsfrequenzen arbeiten, wobei das Verhältnis zwischen diesen Arbeitsfrequenzen mindestens gleich zwei ist.

16. Anlage nach irgendeinem der Ansprüche 11 bis 14, **dadurch gekennzeichnet, dass** sie darüber hinaus zusätzliche Mittel insbesondere zur Verarbeitung der Ergebnisse umfasst, die durch die Analysemittel (4 und 5) geliefert werden, um das Verfahren nach irgendeinem der Ansprüche 7 bis 10 anzuwenden.

**Claims**

1. Automatic process for the inspection and/or sorting of objects, articles or the like, belonging to at least two different categories and made to advance approximately in a single layer, for example on a conveyor belt or a similar transport support, a process **characterised in that** it consists in subjecting the advancing flow of objects, articles or the like (2) to at least two different types of contactless analysis by radiation, the results of which are used in a combined manner for each object, article or the like (2), to discriminate between these objects, articles or the like (2) and/or evaluate at least one characteristic of the latter, the analyses used comprising, on the one hand, at least one surface analysis process able to determine the physical and/or chemical composition of the external or outer layer of an object or the like (2) exposed to the radiation used in this process and, on the other hand, at least one volume analysis process able to determine the equivalent thickness of the material of the same object or the like (2).

2. Process according to claim 1, **characterised in that** it comprises processing objects, articles or the like (2) using a surface analysis process and a volume analysis process, said objects, articles or the like (2) being subjected, successively or simultaneously, to each of the analysis processes during their advancement in single-layer flow.

3. Process according to either claim 1 or claim 2, **characterised in that** the volume analysis process uses microwaves, preferentially in a range of frequencies from 1 GHz to 10 THz.

4. Process according to either claim 1 or claim 2, **characterised in that** the volume analysis process uses transmission X-rays, in an energy range of between 2 keV and 100 keV.

5. Process according to any of claims 1 to 4, **characterised in that** the surface analysis process uses infrared radiation and consists of an optical analysis process in the near or medium infrared spectrum or of a thermographic analysis process in the medium infrared spectrum.

6. Process according to any of claims 1 to 4, **characterised in that** the surface analysis process is a process for analysing the atomic composition, such as, for example, a process for analysis by X-ray fluorescence or a process for analysis by laser-induced plasma spectroscopy.

7. Process according to any of claims 1 to 6, **characterised in that** it consists, for fibrous objects, articles or the like (2), of determining the moisture level from the combined results provided by the surface and volume analysis processes.

8. Process according to any of claims 1 to 7, **characterised in that** it consists for an advancing flow composed of or incorporating objects, articles or the like (2) made of paper and/or of cardboard, of performing a discrimination as a function of the respective total thickness of material.

9. Process according to any of claims 1 to 8, **characterised in that** the results of the different types of analysis are used to perform, preferentially approximately in real time, the contactless weighing of the advancing flow of objects, articles or the like (2).

10. Process according to any of claims 1 to 9, **characterised in that** the results of the different types of analysis are used to perform, preferentially approximately in real time, an evaluation of the lower calorific value, of the upper calorific value, of the potential for biomethanisation, and/or the chlorine level of the advancing flow of objects, articles or the like (2).

11. Installation for the inspection and/or automatic sorting of objects, articles or the like belonging to at least two different classes or categories, in particular for implementing the process according to claim 1, said installation comprising, on the one hand, a means for ensuring the advancement approximately in a single layer of said objects or the like, for example a conveyor belt or a similar transport support, and, on the other hand, at least two contactless analysis means using radiation for the advancing objects, articles or the like, an installation (1) **characterised in that** it further comprises a means (6) for the combined use of the results provided for each object, article or the like (2) by the analysis means (4, 5) of different types, to discriminate between these objects or the like and/or evaluate at least one characteristic of the latter and **in that** said analysis means (4, 5) comprises, on the one hand, at least one surface analysis means (4) able to determine the physical and/or chemical composition of the external or outer layer of an object or the like (2) exposed to the radiation of said means and, on the other hand, at least one volume analysis means able to determine the equivalent thickness of material of the same object or the like (2).

12. Installation according to claim 11, **characterised in that** the volume analysis means (5) is selected from the group formed by the analysis means by hyperfrequency waves and the analysis means by transmission X-rays, the transport support (3) being preferentially essentially transparent for the radiation used.

13. Installation according to claim 11 or 12, **characterised in that** the surface analysis means (4) is selected from a group formed by the near or medium infrared optical analysis means, medium infrared thermography analysis means, X-ray fluorescence analysis means, and laser-induced plasma spectroscopy analysis means, the transport support (3) providing, if necessary, a contrasted background in relation to the objects or the like (2) for the analysis radiation under consideration.

14. Installation according to claim 12 or 13, **characterised in that** the volume analysis means (5) using hyperfrequency waves, preferentially in a range of frequencies from 1 GHz to 10 THz, comprises at least one network of emitting aerials (8) and at least one network of receiving aerials (9), the unit operating at a defined working frequency in the preceding frequency range, for example the planar aerial type, aligned in a direction perpendicular to the direction (D) of advancement of the objects or the like (2) to be inspected or sorted, the receiving aerials (9) being placed under the transport support (3).

15. Installation according to claim 14, **characterised in that** the hyperfrequency wave volume analysis means (5) comprises at least two networks of emitting aerials (8) and receiving aerials (9), the coupled pairs of networks (8, 9) operating at different working frequencies, the ratio between these working frequencies being at least equal to two.

16. Installation according to any of claims 11 to 14, **characterised in that** it further comprises additional means, in particular for processing the results provided by the analysis means (4 and 5), for implementing the process according to any of claims 7 to 10.

Fig. 1

EP 2 602 030 B1

Fig. 2

Fig. 3

Fig. 4

Fig. 5

Fig. 6

Fig. 7

| Flux sec |
|---|
| Taux d'humidité < X % |

**Rapport Phase / Pertes > R**

OUI          NON

| Flux humide |
|---|
| Taux d'humidité > X % |

**Déphasage important < $S_{d1}$**

NON → | Magazines secs |
| Tri dans bac A |

**Déphasage très important < $S_{d2}$**

NON → | Magazines humides |
| Tri dans bac A |

OUI

OUI

**Faible échauffement**

NON → | Papier sec |
| Tri dans bac A |

| Produits non |
|---|
| dissociables |
| Tri dans bac C |
| Cartonnette mouillé |

OUI

| Cartonnette sèche |
|---|
| Tri dans bac B |

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2895688 A
- EP 124350 A
- US 5845529 A
- US 5333493 A
- FR 2906369 A
- US 20100085066 A

**Littérature non-brevet citée dans la description**

- **GLENN F. ENGUEN.** The Six-port Reflectometer : an Alternative NetworkAnalyser. *IEEE transactions on Microwave Theory and Techniques,* Décembre 1977, vol. 25 (12